# EUROPEAN PATENT SPECIFICATION

(11) **EP 2 632 717 B1**
(45) Date of publication and mention of the grant of the patent: **03.07.2019**
(21) Application number: 11782497.9
(22) Date of filing: 27.10.2011
(51) Int. Cl.: B32B 5/26, B32B 27/12, B32B 27/34, B32B 17/02, B32B 17/10, C08J 5/04, C08L 77/00, C08L 77/02, C08L 77/04, C08L 77/06, C08L 77/08, B29C 70/50, B29C 70/68, C08J 5/18, B32B 5/02, C08K 7/20

(54) **POLYAMIDE COMPOSITE STRUCTURES AND PROCESSES FOR THEIR PREPARATION**
POLYAMIDVERBUNDSTRUKTUREN UND VERFAHREN ZU IHRER HERSTELLUNG
STRUCTURES COMPOSITES DE POLYAMIDES ET LEURS PROCÉDÉS DE PRÉPARATION

(30) Priority: 04.11.2010 US 410108 P; 04.11.2010 US 410104 P; 04.11.2010 US 410100 P; 04.11.2010 US 410093 P; 29.10.2010 US 408166 P
(43) Date of publication of application: 04.09.2013
(73) Proprietor: E. I. du Pont de Nemours and Company, Wilmington, DE 19805 (US)
(72) Inventor: ELIA, Andri, E., Chadds Ford Pennsylvania 19317 (US); KIRCHNER, Olaf, Norbert, CH-1272 Genolier (CH); WAKEMAN, Martyn Douglas, CH-1196 Gland (CH); YUAN, Shengmei, Newark Delaware 19711 (US)
(74) Representative: Dannenberger, Oliver Andre
(86) International application number: PCT/US2011/057985
(87) International publication number: WO 2012/058368

(56) References cited:
- WO-A1-2009/062691
- US-A- 4 255 219
- US-A1- 2007 167 552
- US-A1- 2011 217 495

## Description

### FIELD OF THE INVENTION

The present invention relates to the field of composite structures and processes for their preparation, particularly it relates to the field of polyamide composite structures.

### BACKGROUND OF THE INVENTION

With the aim of replacing metal parts for weight saving and cost reduction while having comparable or superior mechanical performance, structures based on composite materials comprising a polymer matrix containing a fibrous material have been developed. With this growing interest, fiber reinforced plastic composite structures have been designed because of their excellent physical properties resulting from the combination of the fibrous material and the polymer matrix and are used in various end-use applications. Manufacturing techniques have been developed for improving the impregnation of the fibrous material with a polymer matrix to optimize the properties of the composite structure.

In highly demanding applications, such as for example structural parts in automotive and aerospace applications, composite materials are desired due to a unique combination of lightweight, high strength and temperature resistance.

High performance composite structures can be obtained using thermosetting resins or thermoplastic resins as the polymer matrix. Thermoplastic-based composite structures present several advantages over thermoset-based composite structures such as, for example, the fact that they can be post-formed or reprocessed by the application of heat and pressure, that a reduced time is needed to make the composite structures because no curing step is required, and their increased potential for recycling. Indeed, the time consuming chemical reaction of cross-linking for thermosetting resins (curing) is not required during the processing of thermoplastics. Among thermoplastic resins, polyamides are particularly well suited for manufacturing composite structures. Thermoplastic polyamide compositions are desirable for use in a wide range of applications including parts used in automobiles, electrical/electronic parts, household appliances and furniture because of their good mechanical properties, heat resistance, impact resistance and chemical resistance and because they may be conveniently and flexibly molded into a variety of articles of varying degrees of complexity and intricacy.

US 4,255,219 discloses a thermoplastic sheet material useful in forming composites. The disclosed thermoplastic sheet material is made of polyamide 6 and a dibasic carboxylic acid or anhydride or esters thereof and at least one reinforcing mat of long glass fibers encased within said layer.

For making integrated composite structures and to increase the performance of polymers, it is often desired to "overmold" one or more parts made of a polymer onto a portion or all of the surfaces of a composite structure so as to surround or encapsulate said surfaces. Overmolding involves shaping, e.g. by injection molding, a second polymer part directly onto at least a portion of one or more surfaces of the composite structure, to form a two-part composite structure, wherein the two parts are adhered one to the other at least at one interface. The polymer compositions used to impregnate the fibrous material (i.e. the matrix polymer composition) and the polymer compositions used to overmold the impregnated fibrous material (i.e. the overmolding polymer composition) are desired to have good adhesion one to the other, extremely good dimensional stability and retain their mechanical properties under adverse conditions, including thermal cycling, so that the composite structure is protected under operating conditions and thus has an increased lifetime.

Unfortunately, conventional thermoplastic polyamide resin compositions that are used to impregnate one or more fibrous layers and to overmold the one or more impregnated fibrous layers may require excessive heating during stamping, forming, or shaping, which may render their surfaces poor in appearance and in functionality, and/or may show poor adhesion between the overmolded polymer and the surface of the component comprising the fibrous material, i.e. the composite structure. The poor adhesion may result in the formation of cracks at the interface of the overmolded composite structures leading to reduced mechanical properties, premature aging and problems related to delamination and deterioration of the article upon use and time.

In such case of weak adhesion, the interface between the composite structure and the overmolding resin will break first, rendering the overmolded composite structure weaker than either of its components. Therefore, high adhesion strength between the components is highly desirable. However, once the bonding strength is high enough that the interface can sustain the applied load without being the first to break, yet higher mechanical performance of the structure is highly desirable as is needed for the most highly demanding applications. Lower mechanical performance in these most demanding applications may impair the durability and safety of the article upon use and time. Flexural strength, i.e. the maximum flexural stress sustained by the test specimen during a bending test, is commonly used as an indication of a material's ability to bear (or to sustain, or to support) load when flexed. When overmolding a resin composition onto at least a portion of a composite structure, high mechanical performance such as flexural strength of the structure is desired beyond that realized by good bonding strength between the composite structure and the overmolding resin.

There is a need for a thermoplastic polyamide composite structure that is easier to process in forming, shaping, or stamping, that exhibits good mechanical properties, especially flexural strength and having at least a portion of its surface allowing a good adhesion between its surface and an overmolding resin comprising a polyamide resin.

### SUMMARY OF THE INVENTION

Described herein is a composite structure having a surface, which surface has at least a portion made of a surface resin composition, and comprising a fibrous material selected from non-woven structures, textiles, fibrous battings and combinations thereof, said fibrous material being impregnated with a matrix resin composition, wherein the surface resin composition is selected from polyamide compositions comprising a blend of (A) one or more fully aliphatic polyamides selected from group (I) polyamides having a melting point of less than 230°C, and (B) one or more fully aliphatic polyamides selected from group (II) polyamides having a melting point of at least 250°C, and wherein the matrix resin composition is independently selected from (B) or independently selected from blends of (A) and (B).

Further described herein is a process for making the composite structure described above. The process for making the composite structure described above comprises a step of i) impregnating with the matrix resin composition the fibrous material, wherein at least a portion of the surface of the composite structure is made of the surface resin composition.

### DETAILED DESCRIPTION

The composite structure according to the present invention has improved impact resistance and flexural strength and allows a good adhesion when a part made of an overmolding resin composition comprising a thermoplastic polyamide is adhered onto at least a portion of the surface of the composite structure. A good impact resistance and flexural strength of the composite structure and a good adhesion between the composite structure and the overmolding resin leads to structures exhibiting good resistance to deterioration and resistance to delamination of the structure with use and time.

As used herein, the term "a" refers to one as well as to at least one and is not an article that necessarily limits its referent noun to the singular.

As used herein, the terms "about" and "at or about" are intended to mean that the amount or value in question may be the value designated or some other value about the same. The phrase is intended to convey that similar values promote equivalent results or effects according to the invention.

As used herein, the term "melting point" in reference to a polyamide refers to the melting point of the pure resin as determined with differential scanning calorimetry (DSC) at a scan rate of 10°C/min in the first heating scan, wherein the melting point is taken at the maximum of the endothermic peak. In customary measurements of melting behavior of blends of polymers, more than one heating scans may be performed on a single specimen, and the second and/or later scans may show a different melting behavior from the first scan. This different melting behavior may be observed as a shift in temperature of the maximum of the endothermic peak and/or as a broadening of the melting peak with possibly more than one peaks, which may be an effect of possible transamidation in the case of more than one polyamides. However, when selecting polyamides for Group I or for Group II polyamides in the scope of the current invention, always the peak of the melting endotherm of the first heating scan of the single polyamide is used. As used herein, a scan rate is an increase of temperature per unit time. Sufficient energy must be supplied to maintain a constant scan rate of 10°C/min until a temperature of at least 30°C and preferably at least 50°C above the melting point is reached.

The present invention comprises a fibrous material that is impregnated with a matrix resin composition. At least a portion of the surface of the composite structure is made of a surface resin composition. The matrix resin composition and the surface resin composition may be identical or may be different.

As used herein, the term "a fibrous material being impregnated with a matrix resin composition" means that the matrix resin composition encapsulates and embeds the fibrous material so as to form an interpenetrating network of fibrous material substantially surrounded by the matrix resin composition. For purposes herein, the term "fiber" refers to a macroscopically homogeneous body having a high ratio of length to width across its cross-sectional area perpendicular to its length. The fiber cross section can be any shape, but is typically round. The fibrous material may be in any suitable form known to those skilled in the art and is preferably selected from non-woven structures, textiles, fibrous battings and combinations thereof. Non-woven structures can be selected from random fiber orientation and aligned fibrous structures. Examples of random fiber orientation include without limitation chopped and continuous material which can be in the form of a mat, a needled mat or a felt. Examples of aligned fibrous structures include without limitation unidirectional fiber strands, bidirectional strands, multidirectional strands, multi-axial textiles. Textiles can be selected from woven forms, knits, braids and combinations thereof. The fibrous material can be continuous or discontinuous in form.

Depending on the end-use application of the composite structure and the required mechanical properties, more than one fibrous materials can be used, either by using several same fibrous materials or a combination of different fibrous materials, i.e. the first component described herein may comprise one or more fibrous materials. An example of a combination of different fibrous materials is a combination comprising a non-woven structure such as for example a planar random mat which is placed as a central layer and one or more woven continuous fibrous materials that are placed as outside layers. Such a combination allows an improvement of the processing and thereof of the homogeneity of the first component thus leading to improved mechanical properties. The fibrous material may be made of any suitable material or a mixture of materials provided that the material or the mixture of materials withstand the processing conditions used during impregnation by the matrix resin composition and the surface resin composition.

Preferably, the fibrous material comprises glass fibers, carbon fibers, aramid fibers, graphite fibers, metal fibers, ceramic fibers, natural fibers or mixtures thereof; more preferably, the fibrous material comprises glass fibers, carbon fibers, aramid fibers, natural fibers or mixtures thereof; and still more preferably, the fibrous material comprises glass fibers, carbon fibers and aramid fibers or mixture mixtures thereof. By natural fiber, it is meant any of material of plant origin or of animal origin. When used, the natural fibers are preferably derived from vegetable sources such as for example from seed hair (e.g. cotton), stem plants (e.g. hemp, flax, bamboo; both bast and core fibers), leaf plants (e.g. sisal and abaca), agricultural fibers (e.g., cereal straw, corn cobs, rice hulls and coconut hair) or lignocellulosic fiber (e.g. wood, wood fibers, wood flour, paper and wood-related materials). As mentioned above, more than one fibrous materials can be used. A combination of fibrous materials made of different fibers can be used such as for example a composite structure comprising one or more central layers made of glass fibers or natural fibers and one or more surface layers made of carbon fibers or glass fibers. Preferably, the fibrous material is selected from woven structures, non-woven structures and combinations thereof, wherein said structures are made of glass fibers and wherein the glass fibers are E-glass filaments with a diameter between 8 and 30 microns and preferably with a diameter between 10 to 24 microns.

The fibrous material may further contain a thermoplastic material and the materials described above, for example the fibrous material may be in the form of commingled or co-woven yarns or a fibrous material impregnated with a powder made of a thermoplastic material that is suited to subsequent processing into woven or non-woven forms, or a mixture for use as a uni-directional material or a fibrous material impregnated with oligomers that will polymerize in situ during impregnation.

Preferably, the ratio between the fibrous material and the polymer materials in the first component. i.e. the fibrous material in combination with the matrix resin composition and the surface resin composition, is at least 30 volume percent fibrous material and more preferably between 40 and 60 volume percent fibrous material, the percentage being a volume-percentage based on the total volume of the first component.

The matrix resin composition is made of a thermoplastic resin that is compatible with the surface resin composition. The surface resin composition is selected from polyamide compositions comprising a blend of (A) one or more fully aliphatic group (I) polyamides having a melting point of less than 230°C and (B) one or more fully aliphatic polyamides selected from group (II) polyamides having a melting point of at least 250°C. The matrix resin composition is independently selected from (B) or independently selected from blends of (A) and (B). The matrix resin composition and the surface resin composition may be identical or different. When the surface resin composition and the matrix resin composition are different, and when the matrix resin composition is selected from blends of (A) and (B), it means that the component (A), i.e. the one or more group (I) fully aliphatic polyamides having a melting point of less than 230°C, and/or the component (B), i.e. the one or more fully aliphatic polyamides selected from group (II) polyamides having a melting point of at least 250°C, are not the same and/or that the amounts of component (A) and/or (B) are different in the surface resin composition and the matrix resin composition.

Preferably, the matrix resin composition comprises a blend of (A) the one or more group (I) polyamides and (B) one or more polyamides selected from group (II) polyamides in a weight ratio (A:B) from about 1:99 to about 95:5, more preferably from about 15:85 to about 85:15. Still more preferably the matrix resin composition comprises a blend of (A) the one or more group (I) polyamides and (B) one or more polyamides selected from group (II) polyamides in a weight ratio (A:B) from about 20:80 to about 30:70, or is selected solely from one or more polyamides B.

Preferably, the surface resin composition comprises a blend of (A) the one or more group (I) polyamides and (B) one or more polyamides selected from group (II) polyamides (B) in a weight ratio (A:B) from about 1:99 to about 95:5, more preferably from about 15:85 to about 85:15, and still more preferably 40:60 to about 60:40.

Polyamides are condensation products of one or more dicarboxylic acids and one or more diamines, and/or one or more aminocarboxylic acids, and/or ring-opening polymerization products of one or more cyclic lactams.

The one or more fully aliphatic polyamides (A) and (B) are formed from aliphatic and alicyclic monomers such as diamines, dicarboxylic acids, lactams, aminocarboxylic acids, and their reactive equivalents. A suitable aminocarboxylic acid is 11-aminododecanoic acid. Suitable lactams include caprolactam and laurolactam. In the context of this invention, the term "fully aliphatic polyamide" also refers to copolymers derived from two or more such monomers and blends of two or more fully aliphatic polyamides. Linear, branched, and cyclic monomers may be used. Carboxylic acid monomers comprised in the fully aliphatic polyamides are aliphatic carboxylic acids, such as for example adipic acid (C6), pimelic acid (C7), suberic acid (C8), azelaic acid (C9), sebacic acid (C10), dodecanedioic acid (C12) and tetradecanedioic acid (C14). Preferably, the aliphatic dicarboxylic acids of the one or more fully aliphatic polyamides (A) and (B) are selected from adipic acid and dodecanedioic acid. The one or more fully aliphatic polyamides (A) and (B) described herein comprise an aliphatic diamine as previously described. Preferably, the one or more diamine monomers of the one or more fully aliphatic polyamide copolymer (A) and (B) according to the present invention are selected from tetramethylene diamine and hexamethylene diamine. Suitable examples fully aliphatic polyamides include polyamide 6; polyamide 6,6; polyamide 4,6; polyamide 6,10; polyamide 6,12; polyamide 6,14; polyamide 6,13; polyamide 6,15; polyamide 6,16; polyamide 11; polyamide 12; polyamide 9,10; polyamide 9,12; polyamide 9,13; polyamide 9,14; polyamide 9,15; polyamide 6,16; polyamide 9,36; polyamide 10,10; polyamide 10,12; polyamide 10,13; polyamide 10,14; polyamide 12,10; polyamide 12,12; polyamide 12,13; polyamide 12,14. Preferred examples of fully aliphatic polyamides (B) useful in the polyamide composition of the present invention are poly(hexamethylene adipamide) (polyamide 66, PA66, also called nylon 66), and poly(tetramethylene adipamide) (polyamide 46, PA46, also called nylon 46).

Preferred group (I) polyamides having a melting point of less than 230°C comprise a fully aliphatic polyamide selected from the group consisting of poly(ε-caprolactam) (PA 6), and poly(pentamethylene decanediamide) (PA510), poly(pentamethylene dodecanediamide) (PA512), poly(ε-caprolactam/hexamethylene hexanediamide) (PA6/66), poly(ε-caprolactam/hexamethylene decanediamide) (PA6/610), poly(ε-caprolactam/hexamethylene dodecanediamide) (PA6/612), poly(hexamethylene tridecanediamide) (PA613), poly(hexamethylene pentadecanediamide) (PA615), poly(ε-caprolactam/hexamethylene hexanediamide/hexamethylene decanediamide) (PA6/66/610), poly(ε-caprolactam/hexamethylene hexanediamide/hexamethylene dodecanediamide) (PA6/66/612), poly(ε-caprolactam/hexamethylene hexanediamide/hexamethylene decanediamide/hexamethylene dodecanediamide) (PA6/66/610/612), poly(2-methylpentamethylene hexanediamide/hexamethylene hexanediamide/) (PA D6/66), poly(decamethylene decanediamide) (PA1010), poly(decamethylene dodecanediamide) (PA1012), poly(11-aminoundecanamide) (PA11), poly(12-aminododecanamide) (PA12), PA6,12, PA12,12.

Preferred group (II) polyamides having a melting point of at least 250°C, are polyamides selected from the group poly(hexamethylene hexanediamide) (PA 66), poly(ε-caprolactam/hexamethylene hexanediamide) (PA6/66), (PA6/66/610), poly(ε-caprolactam/hexamethylene hexanediamide/hexamethylene dodecanediamide) (PA6/66/612), poly(ε-caprolactam/hexamethylene hexanediamide/hexamethylene decanediamide/hexamethylene dodecanediamide) (PA6/66/610/612), poly(2-methylpentamethylene hexanediamide/hexamethylene hexanediamide/) (PA D6/66), poly(tetramethylene hexanediamide) (PA46).

An embodiment of the current invention comprises a matrix resin composition and a surface resin composition comprising PA6 (group (I) polyamide A) and PA66 (group (II) polyamide B) in an A:B ratio of 25:75.

A preferred embodiment of the current invention comprises a matrix resin composition comprising PA6 (group (I) polyamide A) and PA66 (group (II) polyamide B) in a A:B ratio of 25:75 and a surface resin composition comprising PA6 (group (I) polyamide A) and PA66 (group (II) polyamide B) in an A:B ratio of 50:50.

Another preferred embodiment of the current invention comprise a matrix resin composition comprising PA66 (group (II) polyamide B) and a surface resin composition comprising PA6 (group (I) polyamide A) and PA66 (group (II) polyamide B) in an A:B ratio of 50:50.

The surface resin composition described herein and/or the matrix resin composition may further comprise one or more impact modifiers, one or more heat stabilizers, one or more oxidative stabilizers, one or more ultraviolet light stabilizers, one or more flame retardant agents or mixtures thereof.

The surface resin composition described herein and/or the matrix resin composition may further comprise one or more reinforcing agents such as glass fibers, glass flakes, carbon fibers, carbon nanotubes, mica, wollastonite, calcium carbonate, talc, calcined clay, kaolin, magnesium sulfate, magnesium silicate, boron nitride, barium sulfate, titanium dioxide, sodium aluminum carbonate, barium ferrite, and potassium titanate. When present, the one or more reinforcing agents are present in an amount from at or about 1 to at or about 60 wt-%, preferably from at or about 1 to at or about 40 wt-%, or more preferably from at or about 1 to at or about 35 wt-%, the weight percentages being based on the total weight of the surface resin composition or the matrix resin composition, as the case may be.

As mentioned above, the matrix resin composition and the surface resin composition may be identical or different. With the aim of increasing the impregnation rate of the fibrous material, the melt viscosity of the compositions may be reduced and especially the melt viscosity of the matrix resin composition.

The surface resin composition described herein and/or the matrix resin composition may further comprise modifiers and other ingredients, including, without limitation, flow enhancing additives, lubricants, antistatic agents, coloring agents (including dyes, pigments, carbon black, and the like), nucleating agents, crystallization promoting agents and other processing aids known in the polymer compounding art.

Fillers, modifiers and other ingredients described above may be present in the composition in amounts and in forms well known in the art, including in the form of so-called nano-materials where at least one of the dimensions of the particles is in the range of 1 to 1000 nm.

Preferably, the surface resin compositions and the matrix resin compositions are melt-mixed blends, wherein all of the polymeric components are well-dispersed within each other and all of the non-polymeric ingredients are well-dispersed in and bound by the polymer matrix, such that the blend forms a unified whole. Any melt-mixing method may be used to combine the polymeric components and non-polymeric ingredients of the present invention. For example, the polymeric components and non-polymeric ingredients may be added to a melt mixer, such as, for example, a single or twin-screw extruder; a blender; a single or twin-screw kneader; or a Banbury mixer, either all at once through a single step addition, or in a stepwise fashion, and then melt-mixed. When adding the polymeric components and non-polymeric ingredients in a stepwise fashion, part of the polymeric components and/or non-polymeric ingredients are first added and melt-mixed with the remaining polymeric components and non-polymeric ingredients being subsequently added and further melt-mixed until a well-mixed composition is obtained.

Depending on the end-use application, the composite structure according to the present invention may have any shape. In a preferred embodiment, the composite structure according to the present invention is in the form of a sheet structure. The composite structure may be flexible, in which case it can be rolled.

The composite structure can be made by a process that comprises a step of impregnating the fibrous material with the matrix resin composition, wherein at least a portion of the surface of the composite structure, is made of the surface resin composition. Preferably, the fibrous material is impregnated with the matrix resin by thermopressing. During thermopressing, the fibrous material, the matrix resin composition and the surface resin composition undergo heat and pressure in order to allow the resin compositions to melt and penetrate through the fibrous material and, therefore, to impregnate said fibrous material.

Typically, thermopressing is made at a pressure between 2 and 100 bars and more preferably between 10 and 40 bars and a temperature which is above the melting point of the matrix resin composition and the surface resin composition, preferably at least about 20°C above the melting point to enable a proper impregnation. Heating may be done by a variety of means, including contact heating, radiant gas heating, infra red heating, convection or forced convection air heating, induction heating, microwave heating or combinations thereof.

The impregnation pressure can be applied by a static process or by a continuous process (also known as dynamic process), a continuous process being preferred for reasons of speed. Examples of impregnation processes include without limitation vacuum molding, in-mold coating, cross-die extrusion, pultrusion, wire coating type processes, lamination, stamping, diaphragm forming or press-molding, lamination being preferred. During lamination, heat and pressure are applied to the fibrous material, the matrix resin composition and the surface resin composition through opposing pressured rollers or belts in a heating zone, preferably followed by the continued application of pressure in a cooling zone to finalize consolidation and cool the impregnated fibrous material by pressurized means. Examples of lamination techniques include without limation calendering, flatbed lamination and double-belt press lamination. When lamination is used as the impregnating process, preferably a double-belt press is used for lamination.

Should the matrix resin composition and the surface resin composition be different, the surface resin composition always faces the environment of the first component so as to be accessible when the overmolding resin composition is applied onto the composite structure.

The matrix resin composition and the surface resin composition are applied to the fibrous material by conventional means such as for example powder coating, film lamination, extrusion coating or a combination of two or more thereof, provided that the surface resin composition is applied on at least a portion of the surface of the composite structure, which surface is exposed to the environment of the first component.

During a powder coating process, a polymer powder which has been obtained by conventional grinding methods is applied to the fibrous material. The powder may be applied onto the fibrous material by scattering, sprinkling, spraying, thermal or flame spraying, or fluidized bed coating methods. Optionally, the powder coating process may further comprise a step which consists in a post sintering step of the powder on the fibrous material. The matrix resin composition and the surface resin composition are applied to the fibrous material such that at least a portion of the surface of the first component is made of the surface resin composition. Subsequently, thermopressing is performed on the powder coated fibrous material, with an optional preheating of the powder coated fibrous material outside of the pressurized zone.

During film lamination, one or more films made of the matrix resin composition and one or more films made of the surface resin composition which have been obtained by conventional extrusion methods known in the art such as for example blow film extrusion, cast film extrusion and cast sheet extrusion are applied to the fibrous material, e.g. by layering. Subsequently, thermopressing is performed on the assembly comprising the one or more films made of the matrix resin composition and the one or more films made of the surface resin composition and the one or more fibrous materials. In the resulting first component, the films melt and penetrate around the fibrous material as a polymer continuum surrounding the fibrous material.

During extrusion coating, pellets and/or granulates made of the matrix resin composition and pellets and/or granulates made of the surface resin composition are melted and extruded through one or more flat dies so as to form one or more melt curtains which are then applied onto the fibrous material by laying down the one or more melt curtains. Subsequently, thermopressing is performed on the assembly comprising the matrix resin composition, the surface resin composition and the one or more fibrous materials.

Depending on the end-use application, the composite structure obtained under step i) may be shaped into a desired geometry or configuration, or used in sheet form. The process for making a composite structure according to the present invention may further comprise a step ii) of shaping the composite structure, said step arising after the impregnating step i). The step of shaping the composite structure obtained under step i) may be done by compression molding, stamping or any technique using heat and/or pressure. Preferably, pressure is applied by using a hydraulic molding press. During compression molding or stamping, the composite structure is preheated to a temperature above the melt temperature of the surface resin composition and is transferred to a forming or shaping means such as a molding press containing a mold having a cavity of the shape of the final desired geometry whereby it is shaped into a desired configuration and is thereafter removed from the press or the mold after cooling to a temperature below the melt temperature of the surface resin composition and preferably below the melt temperature the matrix resin composition.

The composite structure of the invention is particularly suited to overmolding with a polyamide overmolding resin composition. Any polyamide resin can be used for the overmolding resin composition. Particularly good adhesion is obtained when the overmolding resin composition is selected from polyamide compositions selected from (B) or independently selected from polyamide compositions comprising a blend of (A) one or more fully aliphatic polyamides selected from group (I) polyamides having a melting point of less than 230°C, and (B) one or more fully aliphatic polyamides selected from group (II) polyamides having a melting point of at least 250°C.

The composite structures according to the present invention may be used in a wide variety of applications such as for example as components for automobiles, trucks, commercial airplanes, aerospace, rail, household appliances, computer hardware, hand held devices, recreation and sports, structural component for machines, structural components for buildings, structural components for photovoltaic equipments or structural components for mechanical devices.
Examples of automotive applications include without limitation seating components and seating frames, engine cover brackets, engine cradles, suspension arms and cradles, spare tire wells, chassis reinforcement, floor pans, front-end modules, steering column frames, instrument panels, door systems, body panels (such as horizontal body panels and door panels), tailgates, hardtop frame structures, convertible top frame structures, roofing structures, engine covers, housings for transmission and power delivery components, oil pans, airbag housing canisters, automotive interior impact structures, engine support brackets, cross car beams, bumper beams, pedestrian safety beams, firewalls, rear parcel shelves, cross vehicle bulkheads, pressure vessels such as refrigerant bottles and fire extinguishers and truck compressed air brake system vessels, hybrid internal combustion/electric or electric vehicle battery trays, automotive suspension wishbone and control arms, suspension stabilizer links, leaf springs, vehicle wheels, recreational vehicle and motorcycle swing arms, fenders, roofing frames and tank flaps.

Examples of household appliances include without limitation washers, dryers, refrigerators, air conditioning and heating. Examples of recreation and sports include without limitation inline-skate components, baseball bats, hockey sticks, ski and snowboard bindings, rucksack backs and frames, and bicycle frames. Examples of structural components for machines include electrical/electronic parts such as for example housings for hand held electronic devices, computers.

### EXAMPLES

The following materials were used for preparing the composites structures according to the present invention and comparative examples.

### Materials

The materials below are comprised in the compositions used in the Examples and Comparative Examples.

**Polyamide from group II (B)(PA1 in Tables 1 and 2):** a group II polyamide made of adipic acid and 1,6-hexamethylenediamine with a weight average molecular weight of around 32000 Daltons. PA1 has a melting point of about 260°C to about 265°C and a glass transition of about 40°C to about 70°C. PA1 is called PA6,6 and is commercially available, for example, from E. I. du Pont de Nemours and Company.

**Polyamide from group I (A) (PA2 in Tables 1 and 2):** a group I polyamide made of ε-caprolactam having a melting point of about 220°C. PA2 is called PA6 and is commercially available, for example, from BASF corporation.

### Preparation of films

The resin compositions used in the Examples (abbreviated as "E" in Tables 1 and 2), and Comparative Example (abbreviated as "C" in Tables 1 and 2) were prepared by melting or melt-blending the ingredients in a twin-screw extruder at about 280 °C. Upon exiting the extruder through an adaptor and a film die at about 280°C, the compositions were cast onto a casting drum at about 100 °C into about 102 micron thick film in the case of the matrix resin compositions of C1, E1, and E2 (Table 1) and the surface resin composition of C1 (Table 1), about 200 micron thick films in the case of the surface resin composition of Examples E1 and E2 (Table 1), and about 250 micron thick films in the case of both matrix and surface resin compositions of E3 and C2 (Table 2). The thickness of the films was controlled by the rate of drawing.

### Preparation of the composite structures E1, E2, and C1 of Table 1

The composite structures C1 (comparative), E1, and E2 were prepared by first making a laminate by stacking eight layers having a thickness of about 102 microns and made of PA1 and three layers of woven continuous glass fiber textile (E-glass fibers having a diameter of 17 microns, 0.4% of a silane-based sizing and a nominal roving tex of 1200 g/km that have been woven into a 2/2 twill (balanced weave) with an areal weight of 600 g/m²) in the following sequence: two layers made of PA1, one layer of woven continuous glass fiber textile, two layers of PA1, one layer of woven continuous glass fiber textile, two layers of PA1, one layer of woven continuous glass fiber textile and two layers of PA1.

The laminates were prepared using an isobaric double press machine with counter rotating steel belts, both supplied by Held GmbH. The different films enterered the machine from unwinders in the previously defined stacking sequence. The heating zones were about 2000 mm long and the cooling zones were about 1000 mm long. Heating and cooling were maintained without release of pressure. The laminates were prepared with the following conditions: a lamination rate of 1 m/min, a maximum machine temperature of 360°C and laminate pressure of 40 bar. The so-obtained laminates had an overall thickness of about 1.5 mm.

Films of about 200 micrometers and made of the surface polyamide resin compositions of E1 and E2 described in Table 1 were applied to the above described laminate, forming the composite structure. The films comprising the surface polyamide resin compositions were made with a 28mm W&P extruder with an adaptor and film die and an oil heated casting drum. The extruder and adaptor and die temperatures were set at 280°C, and the temperature of the casting drum was set at 100°C. The composite structures were formed by compression molding the films by a Dake Press (Grand Haven, Mich) Model 44-225 (pressure range 0-25K) with an 8 inch platten. A 6x6" specimen of the laminate was placed in the mold and the film was pressed onto the laminate's surface at a tempertature of about 300°C and with a pressure of about 3 KPsi for about 2 minutes, and with a pressure of about 6 Kpsi for about 3 additional minutes and subsequently cooled to room temperature. The composite structures comprising a surface made of the surface polyamide resin compositions of E1 or E2 described in Table 1, the matrix resin compositions PA1 and the fibrous material had an overall thickness of about 1.5 mm.

### Preparation of the composite structures E3 and C2 of Table 2

Preparation of the composite structures E3 and C2 in Table 2 was accomplished by laminating multiple layers of film of compositions shown in Table 2 and woven continuous glass fiber textile (prepared from E-glass fibers having a diameter of 17 microns, sized with 0.4% of a silane-based sizing agent and a nominal roving tex of 1200 g/km that have been woven into a 2/2 twill (balanced weave) with an areal weight of 600 g/m²) in the following sequence: two layers of film of surface resin composition, one layer of woven continuous glass fiber textile, two layers of film of matrix resin composition, one layer of woven continuous glass fiber textile, two layers of film of matrix resin composition, one layer of woven continuous glass fiber textile, and two layers of film of surface resin composition.

The composite structures of table 2 were compression molded by a Dake Press (Grand Haven, Mich) Model 44-225, Pressure range 0 - 25K, with an 8 inch platten. A 6x6" specimen of film and glass textile layers as described above was placed in the mold and heated to a temperature of about 320°C, held at the temperature for 2 minutes without pressure, then pressed at the 320°C temperature with the following pressures: about 6 bar for about 2 minutes, then with about 22 bar for about 2 additional minutes, and then with about 45 bar for about 2 additional minutes; they were subsequently cooled to ambient temperature. The thusly formed composite structures had a thickness of about 1.6 mm.

### Bond Strength of Composite Structures C1, E1, and E2 of Table 1

When composite structures C1, E1, and E2 were over-injection molded with an overmolding resin composition comprising PA1 and 30 weight percent of glass fibers (percentage of the total composition of the overmolding resin), the bond strengths were respectively 0,86, and 121 MPa, demonstrating the superior ability of a blend of polyamide selected from group I with polyamide selected from group II to form strong bond strength to an overmolding resin, when compared to a polyamide from one single group of polyamides.

The over-injection molding was accomplished by over-injection molding 1.7 mm of the overmolding resin composition onto the composite structures obtained as described above. The composite structures C1, E1, and E2 comprising a surface made of the surface resin compositions listed in Table 1, the matrix resin compositions listed in Table 1 and the fibrous material described above were cut into 5x5" (about 127 mm x 127 mm) specimens and placed into a heating chamber for 3 min at 180°C. Then the composite structures were quickly transferred with a robot arm into a mold cavity of an Engel vertical press and were over injection molded with the overmolding resin composition comprising PA1 and 30 weight percent of glass fibers (percentage of the total composition of the overmolding resin) by an Engel molding machine. The transfer time from leaving the heating chamber to contact with the overmolding resin was 9 sec. The mold was oil heated at 120°C. The injection machine was set at 280°C.

The 5x5" specimens of the overmolded composite structures comprising E1, E2, and C1 prepared as described above, were cut into ¾ "x5" test specimens (about 19 mm x about 127 mm), and were notched by cutting the overmolded part up to the interface of the overmolded part and the composite structure. The notch was made through the width at about the middle (lengthwise) of the test specimen. The bond strength of the overmolded resin composition to the composite structure was measured on the notched test specimens via a 3 point bend method, modified ISO-178. The apparatus and geometry were according to ISO method 178, bending the specimen with a 2.0" (about 51 mm) support width with the loading edge at the center of the span. The over-molded part of the specimen was on the tensile side (outer span) resting on the two side supports (at 2" (about 51 mm) apart), while indenting with the single support (the load) on the compression side (inner span) on the composite structure of the specimen. In this test geometry, the notch in the specimens was down (tensile side). The notch was placed ¼" off center (¼" away from the load). The tests were conducted at 2 mm/min. The test was run until a separation or fracture between the two parts of the specimen (delamination) was seen. The stress at that point was recorded.

### Flexural Strength of Composite Structures E3 and C2 in Table 2

The composite structures E3 and C2 in Table 2 were cut into 1/2" (about 12.7 mm) by 2.5" (about 64 mm) long test specimens (bars) using a MK-377 Tile Saw with a diamond edged blade and water as a lubricant. Flexural Strength was tested on the test specimens via a 3-point bend test. The apparatus and geometry were according to ISO method 178, bending the specimen with a 2.0" support width with the loading edge at the center of the span. The tests were conducted with 1 KN load at 2 mm/min until fracture. The results are shown in Table 2, 380 and 332 MPa for composite structures E3 and C2 respectively, demonstrating the superior flexural strength of a composite structure made of a blend of polyamide selected from group I with polyamide selected from group II, when compared to a composite structure made of a polyamide from one single group of polyamides.

**Table 1**

| | **Composite structure** | **Composite structure** | **Composite structure** |
|---|---|---|---|
| | **C1** | **E1** | **E2** |
| Matrix resin composition | 100 wt-% PA1 | 100 wt-% PA1 | 100 wt-% PA1 |
| Surface resin composition | | blend of: | blend of: |
| | 100 wt-% PA1 | 75 wt-% of PA1 and | 50 wt-% of PA1 and |
| | | 25 wt-% of PA2 | 50 wt-% of PA2 |

**Table 2**

| | E3 | C2 |
|---|---|---|
| Matrix Resin Composition | | |
| PA1 | 50 | 100 |
| PA2 | 50 | |
| Surface Resin Composition | | |
| PA1 | 50 | 100 |
| PA2 | 50 | |
| ISO-178 3 Point Flex | | |
| Flexural Strength at Break (Mpa) | 380 | 332 |

## Claims

1. A composite structure having a surface, which surface has at least a portion made of a surface resin composition, and comprising a fibrous material selected from the group consisting of non-woven mats, needled mats, felts; textiles; fibrous battings; and combinations thereof, said fibrous material being impregnated with a matrix resin composition, wherein the surface resin composition is selected from polyamide compositions comprising a blend of (A) one or more fully aliphatic polyamides selected from group (I) polyamides having a melting point of less than 230°C, and (B) one or more fully aliphatic polyamides selected from group (II) polyamides having a melting point of at least 250°C, and wherein the matrix resin composition is independently selected from (B) or independently selected from blends of (A) and (B).

2. The composite structure according to claim 1 wherein the fibrous material is made of glass fibers, carbon fibers, aramid fibers, natural fibers or mixtures thereof.

3. The composite structure according to claim 2, wherein the fibrous material is made of glass fibers.

4. The composite structure according to any one of claims 1 to 3 wherein the fibrous material is from 30 volume percent to 60 volume percent of the composite structure, preferably between 40 volume percent and 60 volume percent.

5. The composite structure according to any one of claims 1 to 4 further comprising one or more additives selected from the group consisting of heat stabilizers, oxidative stabilizers, reinforcing agents and flame retardants or combination thereof.

6. The composite structure according to any of the preceding claims wherein the one or more fully aliphatic polyamides selected from group (I) polyamides is selected from the group consisting of PA 6, PA510, PA512, PA6/66, PA6/610, PA6/612, PA613, PA615, PA6/66/610, PA6/66/612, PA6/66/610/612, PA D6/66, PA1010, PA1012, PA11, PA12, PA612, PA1212.

7. The composite structure according to any of the preceding claims wherein the one or more fully aliphatic polyamides selected from group (II) polyamides is selected from the group consisting of PA 66, PA6/66, PA6/66/610, PA6/66/612, PA6/66/610/612, PA D6/66, PA46.

8. The composite structure according to any one of claims 1 to 7 wherein the weight ratio of the one or more polyamides selected from group (I) polyamides (A) and the one or more polyamides selected from group (II) polyamides (B) (A:B) of the matrix polyamide composition and of the surface polyamide composition is between from 1:99 to 95:5.

9. The composite structure according to any one of claims 1 to 7 wherein the weight ratio of the one or more polyamides selected from group (I) polyamides (A) and the one or more polyamides selected from group (II) polyamides (B) (A:B) of the matrix polyamide composition is from 20:80 to 30:70.

10. The composite structure according to any one of claims 1 to 9 wherein the weight ratio of the one or more polyamides selected from group (I) polyamides (A) and the one or more polyamides selected from group (II) polyamides (B) (A:B) of the surface polyamide composition is from 20:80 to 60:40.

11. The composite structure according to any one of claims 1 to 10 wherein group (I) polyamides (A) comprises PA6, PA6/12, PA10/10 solely or in combinations thereof.

12. The composite structure according to any one of claims 1 to 11 wherein group (II) polyamides (B) comprises PA66, PA46, solely or in combinations thereof.

13. The composite structure according to any one of claims 1 to 12 wherein the matrix resin composition and the surface resin composition are different.

14. The composite structure according to any one of claims 1 to 13 in the form of a component for automobiles, trucks, commercial airplanes, aerospace, rail, household appliances, computer hardware, hand held devices, recreation and sports, structural component for machines, structural components for buildings, structural components for photovoltaic equipments or structural components for mechanical devices.

15. A process for making the composite structure of any one of claims 1 to 14 having a surface, said process comprises a step of:
i) impregnating with a matrix resin composition a fibrous material selected from non-woven mats, needled mats, felts; textiles; fibrous battings; and combinations thereof, said fibrous material being impregnated with a matrix resin composition,
wherein at least a portion of the surface of the composite structure is made of a surface resin composition, and
wherein the surface resin composition is selected from polyamide compositions comprising a blend of (A) one or more fully aliphatic polyamides selected from group (I) fully aliphatic polyamides having a melting point of less than 230°C; and (B) one or more fully aliphatic polyamides selected from group (II) polyamides having a melting point of at least 250°C, and wherein the matrix resin composition is independently selected from (B) or independently selected from blends of (A) and (B).

## Patentansprüche

1. Verbundstruktur, welche eine Oberfläche besitzt, wobei die Oberfläche mindestens einen Abschnitt besitzt, welcher aus eine Harzzusammensetzung besteht und ein faseriges Material enthält, gewählt aus der Gruppe, bestehend aus Vliesmatten, genadelten Matten, Filz; Textilien; faseriger Rohbaumwolle; und Kombinationen hieraus, wobei das faserige Material mit einer Matrixharzzusammensetzung imprägniert ist, wobei die Oberflächenharzzusammensetzung aus Polyamidzusammensetzungen gewählt ist, welche eine Mischung aus (A) einem oder mehreren vollständig aliphatischen Polyamid(en) enthält, gewählt aus Polyamiden der Gruppe (I), welche einen Schmelzpunkt von unter 230°C besitzen, und (B) einem oder mehreren vollständig aliphatischen Polyamid(en), gewählt aus Polyamiden der Gruppe (II), welche einen Schmelzpunkt von mindestens 250°C besitzen, und wobei die Matrixharzverbindung unabhängig aus (B) oder unabhängig aus Mischungen aus (A) und (B) gewählt ist.

2. Verbundstruktur nach Anspruch 1, bei welcher das faserige Material aus Glasfasern, Kohlenstofffasern, Aramidfasern, Naturfasern oder Mischungen hieraus besteht.

3. Verbundstruktur nach Anspruch 2, bei welcher das faserige Material aus Glasfasern besteht.

4. Verbundstruktur nach einem der Ansprüche 1 bis 3, bei welcher das faserige Material zu 30 Volumenprozent bis 60 Volumenprozent der Verbundstruktur darstellt, vorzugsweise zwischen 40 Volumenprozent und 60 Volumenprozent.

5. Verbundstruktur nach einem der Ansprüche 1 bis 4, zudem beinhaltend einen oder mehrere Zusatzstoffe, gewählt aus der Gruppe, bestehend aus Hitzestabilisatoren, oxidativen Stabilisatoren, Verstärkungsmitteln und Flammenhemmern oder einer Kombination hieraus.

6. Verbundstruktur nach einem der vorhergehenden Ansprüche, bei welcher das eine oder die mehrere(n) vollständig aliphatische(n) Polyamid(e), welche(s) aus Polyamiden der Gruppe (I) gewählt ist/sind, aus der Gruppe gewählt ist/sind, bestehend aus PA 6, PA510, PA512, PA6/66, PA6/610, PA6/612, PA613, PA615, PA6/66/610, PA6/66/612, PA6/66/610/612, PA D6/66, PA1010, PA1012, PA11, PA12, PA612, PA1212.

7. Verbundstruktur nach einem der vorhergehenden Ansprüche, bei welcher das eine oder die mehreren vollständig aliphatische(n) Polyamid(e), welche(s) aus Polyamiden der Gruppe (II) gewählt ist/sind, aus der Gruppe gewählt ist/sind, bestehend aus PA 66, PA6/66, PA6/66/610, PA6/66/612, PA6/66/610/612, PA D6/66, PA46.

8. Verbundstruktur nach einem der Ansprüche 1 bis 7, bei welcher das Gewichtsverhältnis zwischen dem einen oder den mehreren Polyamid(en), welche(s) aus Polyamiden der Gruppe (I) gewählt ist/sind (A) und dem einen oder den mehreren Polyamid(en), welche(s) aus Polyamiden der Gruppe (II) gewählt ist/sind (B), (A zu B) der Matrixpolyamidzusammensetzung und der Oberflächenpolyamidzusammensetzung zwischen 1 zu 99 und 95 zu 5 beträgt.

9. Verbundstruktur nach einem der Ansprüche 1 bis 7, bei welcher das Gewichtsverhältnis zwischen dem einen oder den mehreren Polyamid(en), welche(s) aus Polyamiden der Gruppe (I) gewählt ist/sind (A) und dem einen oder den mehreren Polyamid(en), welche(s) aus Polyamiden der Gruppe (II) gewählt ist/sind (B), (A zu B) der Matrixpolyamidzusammensetzung zwischen 20 zu 80 und 30 zu 70 beträgt.

10. Verbundstruktur nach einem der Ansprüche 1 bis 9, bei welcher das Gewichtsverhältnis zwischen dem einen oder den mehreren Polyamid(en), welche(s) aus Polyamiden der Gruppe (I) gewählt ist/sind (A) und dem einen oder den mehreren Polyamid(en), welche aus Polyamiden der Gruppe (II) gewählt ist/sind (B), (A zu B) der Oberflächenpolyamidzusammensetzung zwischen 20 zu 80 und 60 zu 40 beträgt.

11. Verbundstruktur nach einem der Ansprüche 1 bis 10, bei welcher die Polyamide der Gruppe (I) PA6, PA6/12 oder PA10/10 allein oder in Kombinationen hieraus beinhalten.

12. Verbundstruktur nach einem der Ansprüche 1 bis 11, bei welcher die Polyamide der Gruppe (II) PA66, PA46 allein oder in Kombinationen hieraus beinhalten.

13. Verbundstruktur nach einem der Ansprüche 1 bis 12, bei welcher die Matrixharzzusammensetzung und die Oberflächenharzzusammensetzung sich voneinander unterscheiden.

14. Verbundstruktur nach einem der Ansprüche 1 bis 13 in der Form einer Komponente für Automobile, Zugmaschinen, kommerzielle Flugzeuge, Raumfahrt, Schiene, Haushaltsgeräte, Computerhardware, tragbare Vorrichtungen, Freizeit und Sport, einer Strukturkomponente für Maschinen, von Strukturkomponenten für Gebäude, Strukturkomponenten für Photovoltaikausrüstungen oder Strukturkomponenten für mechanische Vorrichtungen.

15. Verfahren zur Herstellung der Verbundstruktur nach einem der Ansprüche 1 bis 14, welche eine Oberfläche besitzen, wobei das Verfahren einen Schritt beinhaltet, bestehend in:
i) Imprägnieren eines faserigen Materials, gewählt aus der Gruppe, bestehend aus Vliesmatten, genadelten Matten, Filz; Textilien; faseriger Rohbaumwolle; und Kombinationen hieraus, mit einer Matrixharzzusammensetzung, wobei das faserige Material mit einer Matrixharzzusammensetzung imprägniert ist,
wobei mindestens ein Abschnitt der Oberfläche der Verbundstruktur aus einer Oberflächenharzzusammensetzung besteht, und
wobei die Oberflächenharzzusammensetzung aus Polyamidzusammensetzungen gewählt ist, welche eine Mischung aus (A) einem oder mehreren vollständig aliphatischen Polyamid(en) enthält, gewählt aus Polyamiden der Gruppe (I), welche einen Schmelzpunkt von unter 230°C besitzen, und (B) einem oder mehreren vollständig aliphatischen Polyamid(en), gewählt aus Polyamiden der Gruppe (II), welche einen Schmelzpunkt von mindestens 250°C besitzen, und wobei die Matrixharzverbindung unabhängig aus (B) oder unabhängig aus Mischungen aus (A) und (B) gewählt ist.

## Revendications

1. Structure composite ayant une surface, laquelle surface a au moins une portion composée d'une composition de résine de surface, et comprenant un matériau fibreux choisi dans le groupe constitué de mats non tissés, de mats d'aiguilles, de feutres; de textiles; de nappes fibreuses; et de combinaisons de ceux-ci, ledit matériau fibreux étant imprégné avec une composition de résine de matrice, dans laquelle la composition de résine de surface est choisie parmi des compositions de polyamides comprenant un mélange de (A) un ou plusieurs polyamides totalement aliphatiques choisis parmi des polyamides de groupe (I) ayant un point de fusion de moins de 230°C, et (B) un ou plusieurs polyamides totalement aliphatiques choisis parmi des polyamides de groupe (II) ayant un point de fusion d'au moins 250°C et dans laquelle la composition de résine de matrice est indépendamment choisie parmi (B) ou indépendamment choisie parmi des mélanges de (A) et (B).

2. Structure composite selon la revendication 1, dans laquelle le matériau fibreux est composé de fibres de verre, de fibres de carbone, de fibres d'aramide, de fibres naturelles ou de mélanges de celles-ci.

3. Structure composite selon la revendication 2, dans laquelle le matériau fibreux est composé de fibres de verre.

4. Structure composite selon l'une quelconque des revendications 1 à 3, dans laquelle le matériau fibreux est de 30 pour-cent en volume à 60 pour-cent en volume de la structure composite, de préférence entre 40 pour-cent en volume et 60 pour-cent en volume.

5. Structure composite selon l'une quelconque des revendications 1 à 4, comprenant en outre un ou plusieurs additifs choisis dans le groupe constitué de stabilisants thermiques, de stabilisants d'oxydation, d'agents de renforcement et de retardateurs de flamme ou de combinaisons de ceux-ci.

6. Structure composite selon l'une quelconque des revendications précédentes, dans laquelle les un ou plusieurs polyamides totalement aliphatiques choisis parmi des polyamides de groupe (I) sont choisis dans le groupe constitué de PA 6, PA510, PA512, PA6/66, PA6/610, PA6/612, PA613, PA615, PA6/66/610, PA6/66/612, PA6/66/610/612, PA D6/66, PA1010, PA1012, PA11, PA12, PA612, PA1212.

7. Structure composite selon l'une quelconque des revendications précédentes, dans laquelle les un ou plusieurs polyamides totalement aliphatiques choisis parmi des polyamides de groupe (II) sont choisis dans le groupe constitué de PA 66, PA6/66, PA6/66/610, PA6/66/612, PA6/66/610/612, PA D6/66, PA46.

8. Structure composite selon l'une quelconque des revendications 1 à 7, dans laquelle le rapport en poids des un ou plusieurs polyamides choisis parmi des polyamides de groupe (I) (A) et des un ou plusieurs polyamides choisis parmi des polyamides de groupe (II) (B) (A:B) de la composition de polyamide de matrice et de la composition de polyamide de surface est entre 1:99 et 95:5.

9. Structure composite selon l'une quelconque des revendications 1 à 7, dans laquelle le rapport en poids des un ou plusieurs polyamides choisis parmi des polyamides de groupe (I) (A) et des un ou plusieurs polyamides choisis parmi des polyamides de groupe (II) (B) (A:B) de la composition de polyamide de matrice est de 20:80 à 30:70.

10. Structure composite selon l'une quelconque des revendications 1 à 9, dans laquelle le rapport en poids des un ou plusieurs polyamides choisis parmi des polyamides de groupe (I) (A) et des un ou plusieurs polyamides choisis parmi des polyamides de groupe (II) (B) (A:B) de la composition de polyamide de surface est de 20:80 à 60:40.

11. Structure composite selon l'une quelconque des revendications 1 à 10, dans laquelle les polyamides de groupe (I) (A) comprennent PA6, PA6/12, PA10/10 seuls ou dans des combinaisons de ceux-ci.

12. Structure composite selon l'une quelconque des revendications 1 à 11, dans laquelle les polyamides de groupe (II) (B) comprennent PA66, PA46 seuls ou dans des combinaisons de ceux-ci.

13. Structure composite selon l'une quelconque des revendications 1 à 12, dans laquelle la composition de résine de matrice et la composition de résine de surface sont différentes.

14. Structure composite selon l'une quelconque des revendications 1 à 13 sous la forme d'un élément pour des automobiles, des camions, des avions commerciaux, l'aérospatial, le rail, des appareils électroménagers, l'équipement informatique, des dispositifs portatifs, le loisir et les sports, un élément structural pour des machines, des éléments structuraux pour des bâtiments, des éléments structuraux pour des équipements photovoltaïques ou des éléments structuraux pour des dispositifs mécaniques.

15. Procédé pour la fabrication de la structure composite selon l'une quelconque des revendications 1 à 14 ayant une surface, ledit procédé comprend une étape de:
i) imprégnation avec une composition de résine de matrice d'un matériau fibreux choisi parmi des mats non tissés, des mats d'aiguilles, des feutres; des textiles; des nappes fibreuses; et des combinaisons de ceux-ci, ledit matériau fibreux étant imprégné avec une composition de résine de matrice,
dans lequel au moins une portion de la surface de la structure composite est composée d'une composition de résine de surface, et
dans lequel la composition de résine de surface est choisie parmi des compositions de polyamides comprenant un mélange de (A) un ou plusieurs polyamides totalement aliphatiques choisis parmi des polyamides totalement aliphatiques de groupe (I) ayant un point de fusion de moins de 230°C; et (B) un ou plusieurs polyamides totalement aliphatiques choisis parmi des polyamides de groupe (II) ayant un point de fusion d'au moins de 250°C et dans lequel la composition de résine de matrice est indépendamment choisie parmi (B) ou indépendamment choisie parmi des mélanges de (A) et (B).
